# EUROPÄISCHE PATENTANMELDUNG

(11) **EP 0 631 455 A1**
(43) Veröffentlichungstag der Anmeldung: **28.12.1994**
(21) Anmeldenummer: 93110218.0
(22) Anmeldetag: 25.06.1993
(51) Int. Cl.: H04Q 11/04, H04L 12/56

(54) **Verfahren zum Aufrechterhalten von virtuellen Verbindungen bei einem zumindest teilweisen Ausfall von Verbindungswegen**

(71) Anmelder: SIEMENS AKTIENGESELLSCHAFT, D-80333 München (DE)
(72) Erfinder: Obermanns, Sebastian, Dipl.-Phys., D-8000 München (DE); Schoonhoven, Richard, Dipl.-Ing., D-8037 Olching (DE)

(57) **Zusammenfassung**

Eine zunächst innerhalb eines ersten Paketvermittlungsnetzes (PVN1) eingerichtete virtuelle Verbindung wird bei Auftreten einer Verbindungsstörung von der gestörten Stelle aus bis zu den Ursprungs- und Zielvermittlungseinrichtungen ausgelöst. Von der Ursprungsvermittlungseinrichtung aus wird dann ein Rufpaket generiert, durch dessen Auftreten hin eine Ersatzverbindung unter Einbeziehung eines zweiten Paketvermittlungsnetzes (PVN2) zu der Zielvermittlungseinrichtung hin eingerichtet wird. Innerhalb des zweiten Paketvermittlungsnetzes werden dabei das betreffende Rufpaket sowie diesem nachfolgende Signalisierungspakete und Datenpakete der betreffenden virtuellen Verbindung transparent in Datenpaketen der Ersatzverbindung übertragen.

## Beschreibung

Die Erfindung betrifft ein verfahren zum Aufrechterhalten von virtuellen Verbindungen gemäß Oberbegriff des Patentanspruches 1.

Ein derartiges Verfahren ist bereits aus der deutschen Offenlegungsschrift DE 41 28 939 A1 bekannt. Bei diesem bekannten Verfahren wird auf ein teilweises Auslösen hin von der mit der rufenden Teilnehmereinrichtung verbundenen Vermittlungseinrichtung ein das Einrichten einer virtuellen Verbindung forderndes Rufpaket generiert und über die mit der betreffenden Vermittlungseinrichtung verbundene Netzübergangsstelle zu dem zweiten Paketvermittlungsnetz hin übertragen. Dabei ist in dem Rufpaket neben einem Adressenfeld ein Adressenerweiterungsfeld vorgesehen sowie eine festgelegte Markierungsinformation gesetzt. In dem übertragenen Rufpaket ist dabei zumindest nach der betreffenden Netzübergangsstelle in dem Adressenfeld eine die für die gerade einzurichtende virtuelle Verbindung in Frage kommende Netzübergangsstelle bezeichnende Adresseninformation eingetragen. In dem Adressenerweiterungsfeld ist dagegen eine Adresseninformation eingefügt, durch welche die in der gerade teilweise ausgelösten virtuellen Verbindung beteiligte gerufene Teilnehmereinrichtung bezeichnet ist. In dem zweiten Paketvermittlungsnetz wird nach Maßgabe der in dem Adressenfeld des Rufpaketes enthaltenen, die für den Wiedereintritt in das erste Paketvermittlungsnetz in Frage kommende Netzübergangsstelle bezeichnenden Adresseninformation ein Verbindungsweg zu der betreffenden Netzübergangsstelle hin festgelegt und das Rufpaket dorthin weitergeleitet. An der betreffenden Netzübergangsstelle werden dann aufgrund der in dem Rufpaket gesetzten Markierungsinformation die in dem zugehörigen Adressenfeld und Adressenerweiterungsfeld jeweils enthaltenen Adresseninformation gegeneinander ausgetauscht. Im Anschluß daran wird nach Maßgabe der nunmehr in dem Adressenfeld des Rufpakets enthaltenen, die gerufene Teilnehmereinrichtung bezeichnenden Adresseninformation die mit dem Rufpaket angeforderte virtuelle Verbindung zu der mit der gerufenen Teilnehmereinrichtung verbundenen Vermittlungseinrichtung hin eingerichtet.

Wie vorstehend angegeben, setzt das bekannte Verfahren voraus, daß von dem zweiten Paketvermittlungsnetz her das Leistungsmerkmal "Adressenerweiterung" unterstützt wird. Ein solches Leistungsmerkmal kann jedoch nicht in jedem Paketvermittlungsnetz vorausgesetzt werden.

Es ist nun Aufgabe der vorliegenden Erfindung, einen Weg zu zeigen, wie bei einem Verfahren gemäß Oberbegriff des Patentanspruchs 1 eine Aufrechterhaltung einer virtuellen Verbindung unter Einbeziehung des zweiten Paketvermittlungsnetzes erreicht werden kann, ohne daß von diesem zweiten Paketvermittlungsnetz her bezüglich der Signalisierungsprozedur bestimmte Leistungsmerkmale unterstützt werden müssen.

Gelöst wird diese Aufgabe durch die im Patentanspruch 1 aufgeführten Verfahrensmerkmale.

Der Vorteil der Erfindung besteht dabei darin, daß für die Aufrechterhaltung einer virtuellen Verbindung in dem zweiten Paketvermittlungsnetz zunächst eine virtuelle Verbindung unter Verwendung einer für dieses Paketvermittlungsnetz festgelegten Signalisierungsprozedur vollständig aufgebaut wird. Erst bei bestehender Verbindung werden die für ein Wiedereinrichten einer virtuellen Teilverbindung zwischen den mit den Netzübergangsstellen verbundenen Vermittlungseinrichtungen des ersten Paketvermittlungsnetzes erforderlichen Signalisierungspakete transparent über einen Ersatzweg übertragen, so daß an die Signalisierungsprozedur innerhalb des zweiten Paketvermittlungsnetzes keinerlei spezielle Anforderung gestellt werden, sondern vielmehr in diesem Paketvermittlungsnetz jede beliebige Signalisierungsprozedur realisiert sein kann.

Vorteilhafte Ausgestaltungen der Erfindung ergeben sich aus den Unteransprüchen.

Im folgenden wird nun die Erfindung anhand einer Zeichnung beispielsweise näher erläutert.

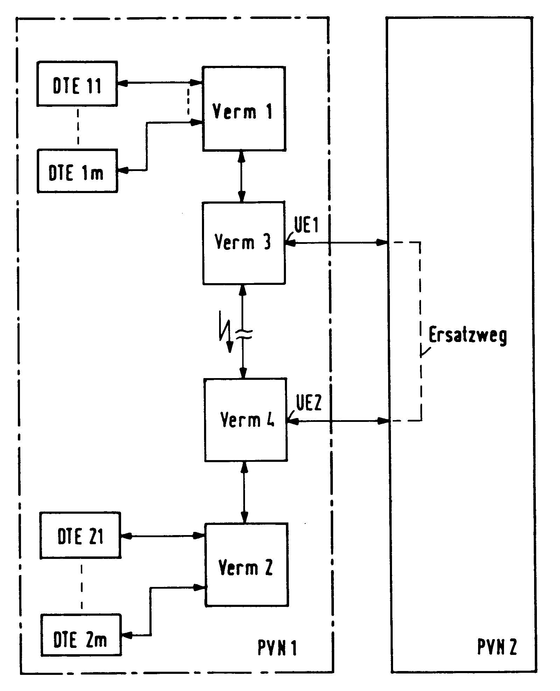

Die Zeichnung zeigt in einem Blockschaltbild über Netzübergange miteinander verbundene Paketvermittlungsnetze, bei denen die vorliegende Erfindung angewandt ist. In der Zeichnung sind zwei gesonderte Paketvermittlungsnetze PVN1 und PVN2 dargestellt, die über Netzübergangsstellen UE1 und UE2 miteinander verbunden sind. Bei dem paketvermittlungsnetz PVN1 möge es sich dabei beispielsweise um ein privates Paketvermittlungsnetz bei dem Paketvermittlungsnetz PVN2 dagegen um ein öffentliches Paketvermittlungsnetz handeln. Dem Paketvermittlungsnetz PVN1 seien dabei eine Vermittlungseinrichtung Verm1 sowie eine Vermittlungseinrichtung Verm2 zugehörig, an welche jeweils eine Mehrzahl von Teilnehmereinrichtungen angeschlossen sein mag. Diese Teilnehmereinrichtungen sind dabei entsprechend ihrer Zugehörigkeit zu den beiden Vermittlungseinrichtungen mit DTE11 bis DTE1m bzw. mit DTE21 bis DTE2m bezeichnet. Zwischen diesen Teilnehmereinrichtungen und der zugehörigen Vermittlungseinrichtung erfolgt jeweils eine Übertragung von dem Aufbau von virtuellen Verbindungen dienenden Signalisierungspaketen und Datenpaketen bei bestehenden virtuellen Verbindungen gemäß der CCITT-Empfehlung X.25. Entsprechend dieser CCITT-Empfehlung werden auch über die beiden zuvor genannten Netzübergangsstellen UE1 und UE2 Signalisierungspakete und Datenpakete zwischen den beiden Paketvermittlungsnetzes PVN1 und PVN2 ausgetauscht.

Die beiden Vermittlungseinrichtungen Verm1 und Verm2, die jeweils sowohl Ursprungs- als auch Zielvermittlungsfunktionen erfüllen können, stehen über eine oder mehrere Verbindungsleitungen miteinander in Verbindung, wobei diese Verbindungsleitungen über Transitvermittlungsstellen geführt sein können. Zwei derartige Transitvermittlungsstellen sind in der Zeichnung mit Verm3 und Verm4 bezeichnet. Die Übertragung von Signalisierungspaketen und Datenpaketen erfolgt bei dem vorliegendem Ausführungsbeispiel nach einem Trunkprotokoll in Anlehnung an die CCITT-Empfehlung X.25.

Im folgenden wird lediglich als Beispiel davon ausgegangen, daß die genannte Netzübergangsstelle UE1 in der Vermittlungseinrichtung Verm3, die Netzübergangsstelle UE2 dagegen in der Vermittlungseinrichtung Verm4 vorgesehen ist. Alternativ dazu können diese Netzübergangsstellen auch an anderen Transitvermittlungsstellen bzw. an Ursprungs- und Zielvermittlungseinrichtungen angeordnet sein.

Nachdem zuvor der prinzipielle Aufbau des Paketvermittlungsnetzes PVN1 sowie dessen Kopplung mit dem Paketvermittlungsnetz PVN2 erläutert worden sind, wird nunmehr auf das erfindungsgemäße Verfahren näher eingegangen. Dazu sei als Beispiel angenommen, daß zwischen den Teilnehmereinrichtungen DTE11 und DTE21 eine virtuelle Verbindung eingerichtet werden soll. Für diesen Verbindungsaufbau wird von der rufenden Teilnehmereinrichtung DTE11 her ein Rufpaket ("Call request") entsprechend der CCITT-Empfehlung X.25 zu der Vermittlungseinrichtung Verm1 hin übertragen. In einem Adressenfeld dieses Rufpaketes ist dabei eine Adresseninformation enthalten, durch welche die Teilnehmereinrichtung DTE21 als gerufene Teilnehmereinrichtung bezeichnet ist. Nach Maßgabe dieser Adresseninformation erfolgt dann von der Vermittlungseinrichtung Verm1 aus eine Wegesuche nach einem geeigneten Verbindungsweg innerhalb des Paketvermittlungsnetzes PVN1 zu der mit der Vermittlungseinrichtung Verm2 verbundenen gerufenen Teilnehmereinrichtung DTE21 hin. Ist ein solcher Verbindungsweg beispielweise unter Einbeziehung der Vermittlungseinrichtungen Verm3 und Verm4 festgelegt, so erfolgt der weitere Verbindungsaufbau in bekannter Weise durch Austausch von Signalisierungspaketen zwischen den Vermittlungseinrichtung Verm1 bis Verm4 und den an der gerade aufzubauenden virtuellen Verbindung beteiligten Teilnehmereinrichtungen DTE11 und DTE21. Nach erfolgtem Verbindungsaufbau werden dann die im Zuge dieser Verbindung zu übertragenden Datenpakete in bekannter Weise innerhalb des Paketvermittlungsnetzes PVN1 weitergeleitet.

Tritt nun bei der zuvor erwähnten virtuellen Verbindung beispielsweise aufgrund einer Unterbrechung einer der zwischen den Vermittlungseinrichtungen Verm1 und Verm2 vorgesehenen Verbindungsleitungen eine Verbindungsstörung auf, so wird, wie im folgenden noch erläutert wird, ein Ersatzweg unter Einbeziehung des Paketvermittlungsnetzes PVN2 ausgewählt. Eine solche Unterbrechung möge beispielsweise, wie in der Zeichnung angedeutet, zwischen den Vermittlungseinrichtungen Verm3 und Verm4 vorliegen. Für die Auswahl eines solchen Ersatzweges wird zunächst die bis zu diesem Zeitpunkt eingerichtete virtuelle Verbindung einerseits durch die Vermittlungseinrichtung Verm3 bis zu der Vermittlungseinrichtung Verm1 und andererseits durch die Vermittlungseinrichtung Verm4 bis zu der Vermittlungseinrichtung Verm2 ausgelöst. Die an die Vermittlungseinrichtung Verm1 angeschlossene rufende Teilnehmereinrichtung DTE11 und die an die Vermittlungseinrichtung Verm2 angeschlossene gerufene Teilnehmereinrichtung DTE21 sind von diesem Auslösen nicht betroffen. Ein solches teilweises Auslösen der bisher eingerichteten virtuellen Verbindung wird im übrigen durch ein von den beiden Vermittlungseinrichtungen Verm3 und Verm4 jeweils abgegebenes spezielles Auslösepaket ("clear request") entsprechend dem zuvor genannten Trunkprotokoll erreicht.

Bei Auftreten eines gerade erwähnten Auslösepaketes in der Vermittlungseinrichtung Verm1 generiert diese ein das Einrichten einer virtuellen Verbindung forderndes Rufpaket, in dessen Adressenfeld die die gerufene Teilnehmereinrichtung (DTE21) bezeichnende, in der Vermittlungseinrichtung Verm1 noch festgehaltene Adresseninformation eingetragen ist. Dieses Rufpaket wird zu der Vermittlungseinrichtung Verm3 hin übertragen. Diese Vermittlungseinrichtung erkennt aufgrund der zuvor angenommenen Übertragungsstörung, daß für die geforderte Verbindung ein Ersatzweg innerhalb des Paketvermittlungsnetzes PVN2 festzulegen ist. Für die Auswahl eines solchen Ersatzweges wird das gerade empfangene Rufpaket zunächst festgehalten, d.h. zwischengespeichert. Auf dieses Rufpaket hin wird dann von der Vermittlungseinrichtung Verm3 aus über die Netzübergangsstelle UE1 der Aufbau einer gesonderten virtuellen Verbindung innerhalb des zweiten Paketvermittlungsnetzes PVN2 zu der Netzübergangsstelle UE2 initiiert, und zwar entsprechend der für das zweite Paketvermittlungsnetz PVN2 festgelegten Signalisierungsprozedur. Hierzu wird zunächst ein gesondertes Rufpaket zu einer mit der Netzübergangsstelle UE1 verbundenen Vermittlungseinrichtung des Paketvermittlungsnetzes PVN2 übertragen. Im Adressenfeld dieses gesonderten Rufpaketes ist dabei eine die Netzübergangsstelle UE2 bezeichnende Adresseninformation enthalten, welche in der Datenbasis der Vermittlungseinrichtung Verm3 hinterlegt ist. Von der betreffenden Vermittlungseinrichtung aus erfolgt dann nach Maßgabe der in dem Adressenfeld enthaltenen Adresseninformation eine Wegesuche für einen geeigneten Verbindungsweg zu der Netzübergangsstelle UE2 hin. Nach Festlegung eines solchen Verbindungsweges innerhalb des Paketvermittlungsnetzes PVN2 wird eine virtuelle Verbindung innerhalb dieses Paketvermittlungsnetzes zwischen den Netzübergangsstellen UE1 und UE2, d.h. zwischen den Vermittlungseinrichtungen Verm3 und Verm4, vollständig entsprechend der für das Paketvermittlungsnetz PVN2 vorgesehenen Signalisierungsprozedur eingerichtet.

Im Anschluß an den Verbindungsaufbau innerhalb des Paketvermittlungsnetzes PVN2 wird das in der Vermittlungseinrichtung Verm3 zunächst festgehaltene Rufpaket als Nutzinformation in ein Datenpaket eingefügt, falls dieses eine entsprechende Länge aufweist. Dieses Datenpaket wird dann im Zuge der gerade eingerichteten virtuellen Verbindung über das Paketvermittlungsnetz PVN2 zu der Vermittlungseinrichtung Verm4 übertragen. Die Weiterleitung dieses Nutzpaketes innerhalb des Paketvermittlungsnetzes PVN2 erfolgt also transparent.

Für den Fall, daß die Länge eines Datenpaketes nicht ausreichend für eine vollständige Übertragung des genannen Rufpaketes ist, wird diese segmentiert. Die einzelnen Segmente werden dann in einer Mehrzahl von Datenpaketen in der genannten Weise transparent innerhalb des Paketvermittlungsnetzes PVN2 übertragen.

Nach einer Depaketierung des empfangenen Datenpaketes bzw. der empfangenen Datenpakete durch die Vermittlungseinrichtung Verm4 wird von dieser das in diesem Datenpaket bzw. diesen Datenpaketen enthaltene Rufpaket zu der Vermittlungseinrichtung Verm2 weitergeleitet. Auf dieses Rufpaket hin werden dann innerhalb der Vermittlungseinrichtung Verm2 die für das Einrichten einer virtuellen Verbindung zwischen den Vermittlungseinrichtungen Verm1 und Verm2 erforderlichen Steuerungsvorgänge abgewickelt. Dabei geneniert die Vermittlungseinrichtung Verm2 unter anderem ein Rufbestätigungspaket ("call accepted"), welches der Vermittlungseinrichtung Verm1 über den zuvor festgelegten Ersatzweg unter Einbeziehung des Paketvermittlungsnetzes PVN2 zugeführt wird, d.h. auch dieses Rufbestätigungssignal wird innerhalb des Paketvermittlungsnetzes PVN2 transparent in einem oder mehreren Datenpaketen übertragen. Damit ist dann das erneute Einrichten einer virtuellen Verbindung zwischen den als Beispiel angenommenen Teilnehmereinrichtungen DTE11 und DTE21 abgeschlossen. Im Anschluß daran wird die Übertragung von Datenpaketen zwischen diesen Teilnehmereinrichtungen unter Verwendung des Ersatzweges fortgesetzt. Auch hier werden die zunächst in dem Paketvermittlungsnetz PVN1 auftretenden Datenpakete für die Übertragung innerhalb des Paketvermittlungsnetzes PVN2 in Datenpakete der Ersatzverbindung eingefügt und somit transparent innerhalb des Paketvermittlungsnetzes PVN2 übertragen.

Bei dem zuvor erläuterten Beispiel kann auch der Fall vorliegen, daß für die ursprünglich ausschließlich innerhalb des Paketvermittlungsnetzes PVN1 eingerichtete virtuelle Verbindung bestimmte netzspezifische Leistungsmerkmale gefordert wurden. Diese Leistungsmerkmale betreffende Informationen, die in der Vermittlungseinrichtung Verm1 hinterlegt sind, werden bei der Festlegung eines Ersatzweges in ein Dienstefeld des transparent innerhalb des Paketvermittlungsnetzes PVN2 übertragenen Rufpaketes eingetragen. Darüber hinaus werden in diesem Dienstefeld auch Informationen bezüglich der gerufenen Teilnehmereinrichtung, wie z.B. Adresse, Leitungsnummer sowie die für die gerade aufrechterhaltene virtuelle Verbindung auf der zu der gerufenen Teilnehmereinrichtung DTE21 hin verlaufenden Anschlußleitung festgelegte virtuelle Kanalnummer, übertragen. Diese Informationen werden in der Vermittlungseinrichtung Verm2 ausgewertet, um nach dem vollständigen Wiedereinrichten einer virtuellen Verbindung unter Einbeziehung des Paketvermittlungsnetzes PVN2 Datenpakete zu der gerufenen Teilnehmereinrichtung DTE21 hin unter derjenigen virtuellen Kanalnummer zu übertragen, die auch für die zuvor teilweise ausgelöste virtuelle Verbindung festgelegt worden ist.

Durch die zuvor erläuterte Aufrechterhaltung einer zunächst innerhalb des Paketvermittlungsnetzes PVN1 geführten virtuellen Verbindung unter Einbeziehung des Paketvermittlungsnetzes PVN2 und das damit verbundene kurzzeitige Auslösen der betreffenden virtuellen Verbindung kann der Fall eintreten, daß noch nicht sämtliche von der Vermittlungseinrichtung Verm1 her abgegebenen Datenpakete von der Vermittlungseinrichtung Verm2 aufgenommen worden sind, so daß ein in der Vermittlungseinrichtung Verm1 für die betreffende virtuelle Verbindung geführter Sendezähler einen von dem in der Vermittlungseinrichtung Verm2 geführten zugehörigen Empfangszähler abweichenden momentanen Zählerstand aufweist. Dieser momentane Zählerstand entspricht in bekannter Weise der Sequenznummer des im Zuge der virtuellen Verbindung zuletzt gesendeten bzw. empfangenen Datenpaketes. Ein Ausgleich dieser momentanen Zählerstände wird bei dem vorliegenden Ausführungsbeispiel dadurch erreicht, daß Angaben bezüglich des Zählerstandes des in der Vermittlungseinrichtung Verm2 geführten Empfangszählers in dem oben erwähnten Rufbestätigungspaket ("call accepted") über den Ersatzweg zu der Vermittlungseinrichtung Verm1 hin übertragen wird, beispielsweise in einem Benutzerdatenfeld dieses Rufbestätigungspaketes. Von der Vermittlungseinrichtung Verm1 wird dann die Übertragung von Datenpaketen mit demjenigen Datenpaket fortgesetzt, dessen Sequenznummer dem gerade mitgeteilten Zählerstand entspricht. Wenn durch das zuvor erläuterte kurzzeitige Teilauslösen einer bestehenden virtuellen Verbindung nicht sämtliche von der Vermittlungseinrichtung Verm1 gesendeten Datenpakete in der Vermittlungseinrichtung Verm2 eingetroffen sind, werden also die verlorengegangenen Datenpakete, die noch in Kopie in der Vermittlungseinrichtung Verm1 festgehalten sind, erneut zu der Vermittlungseinrichtung Verm2 übertragen.

Im übrigen kann das zuvor beschriebene Verfahren zur Aufrechterhaltung von virtuellen Verbindungen auch dahingehend ausgebildet sein, daß eine zunächst über einen Ersatzweg unter Einbeziehung des Paketvermittlungsnetzes PVN2 geführte virtuelle Verbindung bei Wiederverfügbarkeit eines internen Verbindungsweges innerhalb des Paketvermittlungsnetzes PVN1 über diesen weitergeführt wird. Hierzu ist die Tatsache, daß eine virtuelle Verbindung über einen Ersatzweg geführt ist, in den Vermittlungseinrichtungen für diese virtuelle Verbindung gesondert festgehalten. Bei dem oben erläuterten Beispiel handelt es sich also z.B. um die Vermittlungseinrichtung Verm3. Liegen nun in dieser Vermittlungseinrichtung Informationen vor, daß die zuvor ausgefallene Verbindungsleitung wieder betriebsbereit ist, so wird die zuvor beschriebene, über den Ersatzweg innerhalb des Paketvermittlungsnetzes PVN2 geführte virtuelle Verbindung zwischen Ursprungs- und Zielvermittlungseinrichtung, d.h. hier zwischen den Vermittlungseinrichtungen Verm1 und Verm2, ausgelöst. Die zwischen diesen Vermittlungseinrichtungen und den an der virtuellen Verbindung beteiligten Teilnehmereinrichtungen, hier den Teilnehmereinrichtungen DTE11 und DTE21, bestehenden Teilverbindungen sind von diesem teilweisen Auslösen nicht berührt. Im Anschluß daran wird im Zuge einer erneuten Wegesuche nach Maßgabe der in der Vermittlungseinrichtung Verm1 noch für die gerufene Teilnehmereinrichtung DTE21 gespeicherten Adresseninformation ein Verbindungsweg innerhalb des Paketvermittlungsnetzes PVN1 zu der mit dieser gerufenen Teilnehmereinrichtung verbundenen Vermittlungseinrichtung, hier zu der Vermittlungseinrichtung Verm2, hin festgelegt und über diesen ein entsprechendes Rufpaket übertragen. Das betreffende Rufpaket enthält dabei ein Dienstsignal, durch welches der Vermittlungseinrichtung Verm2 angezeigt wird, daß lediglich eine bereits über einen Ersatzweg geführte virtuelle Verbindung wieder einzurichten ist, d.h. daß dieses Rufpaket nicht zu der gerufenen Teilnehmereinrichtung DTE21 hin zu übertragen ist. Auf den Empfang dieses Rufpaketes hin erfolgt dann von der Vermittlungseinrichtung Verm2 die Rückübertragung eines Rufbestätigungspaketes, um die gerade teilweise ausgelöste virtuelle Verbindung zwischen den Teilnehmereinrichtungen DTE11 und DTE21 wieder vollständig herzustellen.

Um ein solches Herstellen einer virtuellen Verbindung ohne Datenpaketverluste durchführen zu können, werden, wie bereits im Zusammenhang mit der Einrichtung einer virtuellen Verbindung über einen Ersatzweg erläutert worden ist, die in den Vermittlungseinrichtungen Verm1 und Verm2 geführten Sende- und Empfangszähler resynchronisiert, indem in dem zuvor erwähnten Rufbestätigungspaket wieder Angaben bezüglich des momentanen Zählerstandes des in der Vermittlungseinrichtung Verm2 geführten Empfangszählers zu der Vermittlungseinrichtung Verm1 hin übertragen und dort ausgewertet werden.

Bisher wurde als Beispiel lediglich der Fall betrachtet, daß bei einer eingerichteten virtuellen Verbindung Datenpakete von einer rufenden Teilnehmereinrichtung zu einer gerufenen Teilnehmereinrichtung hin übertragen werden. Bei einer bidirektionalen virtuellen Verbindung, wie es bei einer Verbindung gemäß der CCITT-Empfehlung X.25 der Fall ist, werden auch die in Gegenrichtung übertragenen Datenpakete in der oben angegebenen Weise innerhalb des Paketvermittlungsnetzes PVN2 transparent in Datenpaketen der Ersatzverbindung übertragen. Darüber hinaus ist bei dem zuvor erläuterten Ausführungsbeispiel für diese Gegenrichtung in der Vermittlungseinrichtung Verm2 ein Sendezähler, in der Vermittlungseinrichtung Verm1 dagegen ein zugehöriger Empfangszähler geführt. Bei dem Einrichten eines Ersatzweges über das Paketvermittlungsnetz PVN2 bzw. dem Wiedereinrichten einer zunächst über einen solchen Ersatzweg geführten virtuellen Verbindung ausschließlich innerhalb des Paketvermittlungsnetzes PVN1 werden dabei in dem jeweiligen, oben erwähnten Rufpaket, beispielsweise in dessen Benutzerdatenfeld, Angaben bezüglich des momentanen Zählerstandes des Empfangszählers zu der Vermittlungseinrichtung Verm2 hin übertragen, um anhand dieser Angaben eine oben beschriebene Resynchronisation der Sende- und Empfangszähler zu erreichen.

Abschließend sei noch darauf hingewiesen, daß zwar vorstehend am Beispiel einer zwischen den Teilnehmereinrichtungen DTE11 und DTE21 eines privaten Paketvermittlungsnetzes PVN1 verlaufenden virtuellen Verbindung ein ersatzweises Aufrechterhalten einer solchen virtuellen Verbindung unter Einbeziehung eines öffentlichen Paketvermittlungsnetzes PVN2 erläutert worden ist. Das vorstehend beschriebene Verfahren ist jedoch allgemein immer dann anwendbar, wenn innerhalb eines beliebigen Paketvermittlungsnetzes beispielsweise durch Ausfall von Verbindungsleitungen eine eingerichtete virtuelle Verbindung gestört ist und dieses Paketvermittlungsnetz mit einem weiteren Paketvermittlungsnetz über Netzübergangsstellen in Verbindung steht. Derartige Netzübergangsstellen können im übrigen nicht nur, wie vorstehend als Beispiel angenommen, an Transitvermittlungseinrichtungen, sondern auch an Ursprungs- und Zielvermittlungseinrichtungen vorgesehen sein.

## Patentansprüche

1. Verfahren zum Aufrechterhalten von zwischen rufenden und gerufenen Teilnehmereinrichtungen (z.B. DTE11, DTE21) eines ersten Paketvermittlungsnetzes (PVN1) bestehenden virtuellen Verbindungen bei einem zumindest teilweisen Ausfall von für die virtuellen Verbindungen innerhalb des ersten Paketvermittlungsnetzes festgelegten Verbindungswegen,
wobei die einzelnen Verbindungswege über eine Mehrzahl von dem ersten Paketvermittlungsnetz zugehörigen Vermittlungseinrichtungen (z.B. Verm1, Verm2) verlaufen und zumindest zwischen zwei dieser Vermittlungseinrichtungen (Verm1, Verm2) und einem zweiten Paketvermittlungsnetz (PVN2) jeweils wenigstens eine Netzübergangsstelle (UE1, UE2) vorgesehen ist,
wobei in den mit einer Netzübergangsstelle versehenen Vermittlungseinrichtungen (Verm1, Verm2) des ersten Paketvermittlungsnetzes (PVN1) jeweils wenigstens eine eine für einen Wiedereintritt in das erste Paketvermittlungsnetz in Frage kommenden Netzübergangsstelle bezeichnende Adresseninformation hinterlegt wird,
wobei bei Ausfall eines Verbindungsweges innerhalb des ersten Paketvermittlungsnetzes (PVN1) die jeweilige darübergeführte virtuelle Verbindung lediglich bis zu den daran beteiligten, mit der rufenden und gerufenen Teilnehmereinrichtung verbundenen Vermittlungseinrichtungen (Verm1, Verm2) ausgelöst wird und wobei auf ein solches teilweises Auslösen hin von der mit der rufenden Teilnehmereinrichtung (z.B. DTE11) verbundenen Vermittlungseinrichtung (Verm1) aus ein Ersatzweg über das zweite Paketvermittlungsnetz (PVN2) unter Einbeziehung einer ersten und einer zweiten Netzübergangsstelle (UE1, UE2) zu der mit der gerufenen Teilnehmereinrichtung (z.B. DTE21) verbundenen Vermittlungseinrichtung (Verm2) hin eingerichtet wird,
**dadurch gekennzeichnet**,
daß für das Einrichten des Ersatzweges von der mit der rufenden Teilnehmereinrichtung (z.B. DTE11) verbundenen Vermittlungseinrichtung (Verm1) ein das Einrichten einer virtuellen Verbindung zu der mit der gerufenen Teilnehmereinrichtung verbundenen Vermittlungseinrichtung forderndes Rufpaket zu der ersten Netzübergangsstelle hin übertragen und dort zunächst festgehalten wird,
daß auf das Rufpaket hin über die erste Netzübergangsstelle (UE1) ein gesonderter Aufbau einer virtuellen Ersatz- Verbindung in dem zweiten Paketvermittlungsnetz (PVN2) zu der mit der zweiten Netzübergangsstelle (UE2) verbundenen Vermittlungseinrichtung (Verm2) nach Maßgabe einer für das zweite Paketvermittlungsnetz festgelegten Signalisierungsprozedur iniiert wird,
daß nach erfolgtem Verbindungsaufbau das zunächst an der ersten Netzübergangsstelle (UE1) festgehaltene Rufpaket in wenigstens ein Datenpaket der gerade eingerichteten virtuellen Ersatz-Verbindung eingefügt und transparent innerhalb des zweiten Paketvermittlungsnetzes (PVN2) zwischen der ersten und der zweiten Netzübergangsstelle übertragen wird
und daß dann nach Maßgabe des innerhalb des zweiten Paketvermittlungsnetzes transparent übertragenen Rufpaketes die gewünschte virtuelle Teilverbindung zwischen den mit der rufenden Teilnehmereinrichtung und der gerufenen Teilnehmereinrichtung verbundenen Vermittlungseinrichtungen des ersten Paketvermittlungsnetzes (PVN1) unter Berücksichtigung des in dem zweiten Paketvermittlungsnetz verlaufenden Ersatzweges wieder eingerichtet wird.

2. Verfahren nach Anspruch 1,
**dadurch gekennzeichnet**,
daß das erste Paketvermittlungsnetz (PVN1) aus einem privaten Paketvermittlungsnetz, das zweite Paketvermittlungsnetz (PVN2) dagegen aus einem öffentlichen Paketvermittlungsnetz gebildet ist.

3. Verfahren nach Anspruch 1 oder 2,
**dadurch gekennzeichnet**,
daß nach erfolgtem Wiedereinrichten der virtuellen Teilverbindung zwischen der rufenden und gerufenen Teilnehmereinrichtung (DTE11, DTE21) zu übertragende Datenpakete ebenfalls in Datenpakete der virtuellen Ersatz-Verbindung eingefügt und transparent innerhalb des zweiten Paketvermittlungsnetzes (PVN2) übertragen werden.

4. Verfahren nach einem der Ansprüche 1 bis 3,
**dadurch gekennzeichnet**,
daß für den Fall, daß das für das erste Paketvermittlungsnetz (PVN1) festgelegte Rufpakete bzw. die in dem ersten Paketvermittlungsnetz übertragenen Datenpakete gegenüber den in dem zweiten Paketvermittlungsnetz (PVN2) übertragbaren Datenpaketen eine größere Länge aufweisen, das Rufpaket bzw. die Datenpakete segmentiert und die Segmente in einer Mehrzahl von Datenpaketen der virtuellen Ersatz-Verbindung transparent innerhalb des zweiten Paketvermittlungsnetzes übertragen werden.
